Europäisches Patentamt

European Patent Office

Office européen des brevets

(19)

(11) Numéro de publication: **0 500 010 A1**

# DEMANDE DE BREVET EUROPEEN

(12)

(21) Numéro de dépôt: **92102599.5**

(22) Date de dépôt: **17.02.92**

(51) Int. Cl.5: **C08L 51/06**, C08L 43/04, C08K 3/22, C08K 5/29

(30) Priorité: **21.02.91 FR 9102079**

(43) Date de publication de la demande:
**26.08.92 Bulletin 92/35**

(84) Etats contractants désignés:
**DE DK FR GB IT SE**

(71) Demandeur: **ALCATEL CABLE**
**30, rue des Chasses**
**F-92111 Clichy Cédex(FR)**

(72) Inventeur: **Perrière, Eric**
**185, avenue Berthelot**
**F-69007 Lyon(FR)**
Inventeur: **Prigent, Madeleine**
**10 Allée des fraises**
**F-91460 Marcoussis(FR)**
Inventeur: **Antolinos, Chantal**
**39, rue de la République**
**F-69740 Gonas(FR)**
Inventeur: **Assier, Jean-Claude**
**13 Villa des 3 Cailloux**
**F-91860 Epinay sous Senart(FR)**

(74) Mandataire: **Weinmiller, Jürgen et al**
**Lennéstrasse 9 Postfach 24**
**W-8133 Feldafing(DE)**

(54) **Polyoléfine stabilisée greffée par un silane.**

(57) La polyoléfine est caractérisée en ce qu'elle comprend en outre un agent desséchant en proportion pondérale de 0,2 % à 3 %, rapportée au poids de la polyoléfine greffée.
Application : gaine de câble

EP 0 500 010 A1

La présente invention concerne une polyoléfine stabilisée greffée par un silane comportant un radical alcoxy hydrolysable, et réticulable en présence d'eau ou de vapeur d'eau, cette polyoléfine pouvant comporter ou non une charge minérale.

On sait préparer des polyoléfines greffées par un silane comportant un radical alcoxy hydrolysable, par réaction de la polyoléfine avec un silane de formule générale $RR_1SiY_2$, dans laquelle R représente un radical hydrocarboné monovalent à insaturation oléfinique ou un radical hydrocarbonoxy hydrolysable, chaque Y représente un radical alcoxy et $R_1$ le même radical que R, un radical méthyle ou le même radical que Y, cette réaction de la polyoléfine avec le silane s'effectuant au-dessus de 140°C en présence d'un composé générateur de radicaux libres et rapidement décomposable à la température de la réaction. La préparation de telles polyoléfines greffées et notamment de polyéthylène greffé, est décrite en particulier dans le document GB-A-1286460. Le silane greffé sur la polyoléfine est par exemple le vinyltriméthoxysilane ou le vinyltriéthoxysilane. Ces polyoléfines greffées peuvent ultérieurement être réticulées par traitement par l'eau ou la vapeur d'eau à basse température, de préférence en présence d'un catalyseur de condensation des silanols.

Les polyoléfines greffées ne présentent cependant pas une stabilité complète. Elles subissent au cours du temps une dégradation progressive, avec apparition de grains durs, dûs à des réticulations locales, ou préréticulations, et de phénomènes d'arrachement de la polyoléfine en cours des opérations de malaxage ou d'extrusion pour leur mise en forme, par exemple pour la fabrication d'une gaine de câble.

Les pièces obtenues, telles que les gaines de câble, présentent alors des défauts d'aspect et peuvent entraîner des claquages lorsqu'elles servent d'isolant électrique.

Des essais effectués dans le cadre de l'invention ont montré que les réticulations locales des polyoléfines greffées par un silane à l'humidité produisaient par hydrolyse progressive des radicaux alcoxy, donnant des groupements alcool, qui réagissent alors d'une chaîne à l'autre en formant des ponts de réticulation, lors des traitements mécaniques, tels qu'un malaxage, entraînant une élévation de la température, même en l'absence de catalyseur de réticulation. On a ainsi observé qu'une polyoléfine greffée par un silane était susceptible au bout de 2 mois de stockage de réticuler au cours d'un malaxage entraînant son échauffement à 220°C.

On ne peut donc actuellement stocker les polyoléfines greffées par un silane que pendant un temps limité, si l'on ne veut pas voir apparaître les grains durs et les phénomènes d'arrachement signalés ci-dessus.

La présente invention a pour but de procurer des polyoléfines greffées par un silane et stabilisées, pouvant être stockées pendant de longues durées sans dégradation de leurs propriétés.

Une polyoléfine greffée par silane stabilisée selon l'invention est caractérisée en ce qu'elle comprend en outre un agent desséchant en proportion pondérale de 0,2 % à 3 % par rapport à son poids, pour éviter une préréticulation due à une présence d'eau dans les matériaux de la polyoléfine.

De préférence, l'agent desséchant est la chaux anhydre ou la dicyclohexylcarbodiimide.

Le mélange de l'agent desséchant à la polyoléfine s'effectue de préférence en même temps que son mélange avec le silane.

La teneur indiquée en agent desséchant est telle qu'elle assure une bonne stabilité de la polyoléfine greffée, sans cependant diminuer de façon significative ses propriétés mécaniques et électriques.

On précise que la polyoléfine greffée considérée est un polyéthylène ou un copolymère d'éthylène sur lequel est greffé un vinyltriméthoxysilane. L'agent desséchant, incorporé dans la composition, évite une préréticulation due à la présence d'eau dans cette composition.

## Revendications

1. Polyoléfine stabilisée greffée par un silane comportant un radical alcoxy hydrolysable, et réticulable en présence d'eau ou de vapeur d'eau, caractérisée en ce qu'elle comprend en outre un agent desséchant en proportion pondérale de 0,2 % à 3 %, rapportée au poids de la polyoléfine greffée, pour éviter une préréticulation due à une présence d'eau dans les matériaux de ladite polyoléfine.

2. Polyoléfine stabilisée selon la revendication 1, caractérisée en ce que l'agent desséchant est la chaux anhydre ou la dicyclohexylcarbodiimide.

3. Polyoléfine stabilisée selon l'une des revendications 1 et 2, caractérisée en ce que la polyoléfine est un polyéthylène ou un copolymère d'éthylène greffé par un vinyltriméthoxysilane.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 681 913 (E. R. EVANS)<br>Résumé<br>* revendications 1,4,5 *<br>--- | 1-3 | C08L51/06<br>C08L43/04<br>C08K3/22<br>C08K5/29 |
| A | EP-A-0 149 903 (BP CHEMICALS)<br>Résumé<br>--- | 1-3 | |
| A | FR-A-1 349 641 (COMPAGNIE FRANCAISE THOMSON-HOUSTON)<br>Résumé<br>* page 1, colonne 1, alinéa 1 *<br>--- | 1-3 | |
| A | EP-A-0 228 505 (GOETZE)<br>Résumé<br>--- | 1-3 | |
| A | EP-A-0 264 336 (RHONE-POULENC CHIMIE)<br>Résumé<br>----- | 1-3 | |

### DOMAINES TECHNIQUES RECHERCHES (Int. Cl.5)

C08L
C08K

Le présent rapport a été établi pour toutes les revendications

| Lieu de la recherche | Date d'achèvement de la recherche | Examinateur |
|---|---|---|
| LA HAYE | 10 JUIN 1992 | GOOVAERTS R.E. |